(19) **Europäisches Patentamt**
**European Patent Office**
**Office européen des brevets**

(11) **EP 4 726 173 A1**

(12) **EUROPEAN PATENT APPLICATION**

(43) Date of publication:
**15.04.2026 Bulletin 2026/16**

(21) Application number: **25208007.2**

(22) Date of filing: **10.10.2025**

(51) International Patent Classification (IPC):
**F01D 5/14** $^{(2006.01)}$  **F01D 5/30** $^{(2006.01)}$
**F01D 5/18** $^{(2006.01)}$

(52) Cooperative Patent Classification (CPC):
**F01D 5/3007; F01D 5/186; F01D 5/187;**
F05D 2250/14; F05D 2260/941

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **11.10.2024 US 202463706231 P**

(71) Applicant: **General Electric Company**
**Cincinnati, Ohio 45215 (US)**

(72) Inventors:
- **REDDINGTON, Jordan Paige**
  **Evendale, 45215 (US)**
- **MORGAN, Clive Andrew**
  **Evendale, 45215 (US)**
- **OSGOOD, Daniel Endecott**
  **Evendale, 45215 (US)**

(74) Representative: **Openshaw & Co.**
**8 Castle Street**
**Farnham, Surrey GU9 7HR (GB)**

(54) **TURBINE ENGINE WITH A BLADE ASSEMBLY HAVING A DOVETAIL**

(57) A turbine engine (10) includes an engine core (11) extending along an engine centerline (20) and includes a compressor section (12), a combustor (14), and a turbine section (16) in serial flow arrangement. A set of blades (30) are circumferentially arranged in the turbine section (16) and the compressor section (12). A set of dovetails (52) mounts the set of blades (30) to a disk (32), rotated about the engine centerline (20). Each dovetail (52) can include a first upper lobe (110) and a first lower lobe (112) defining a first intervening recess (114), and a second upper lobe (120) and a second lower lobe (122) defining a second intervening recess (124), collectively defining a neck (130) for mounting to the disk (32).

FIG. 6

EP 4 726 173 A1

**Description**

CROSS-REFERENCE TO RELATED APPLICATION(S)

This application claims priority to and the benefit of U.S. Provisional Patent App. No. 63/706,231, filed October 11, 2024, the entirety of which is incorporated herein by reference.

TECHNICAL FIELD

The present subject matter relates generally to a blade having a dovetail for a turbine engine, and more specifically to a blade with a dovetail and geometric features.

BACKGROUND

A gas turbine engine typically includes a turbomachine, with a fan in some implementations. The turbomachine generally includes a compressor, combustor, and turbine in serial flow arrangement. The compressor compresses air which is channeled to the combustor where it is mixed with fuel. The mixture is then ignited to generate hot combustion gases. The combustion gases are channeled to the turbine, which extracts energy from the combustion gases for powering the compressor and fan, if used, as well as for producing useful work to propel an aircraft in flight or to power a load, such as an electrical generator.

During operation of the gas turbine engine, various systems generate a relatively large amount of heat and stress. For example, a substantial amount of heat or stress can be generated during operation of the thrust generating systems, lubrication systems, electric motors and/or generators, hydraulic systems, or other systems. A design that mitigates heat loads and/or stresses on an engine component is advantageous.

BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:

FIG. 1 is a schematic cross-sectional view of a gas turbine engine, in accordance with an aspect of the present disclosure.
FIG. 2 is a schematic cross-sectional view of a turbine section of the gas turbine engine of FIG. 1, in accordance with an aspect of the present disclosure.
FIG. 3 is a perspective view of a blade assembly for use in the gas turbine engine of FIG. 1, in accordance with an aspect of the present disclosure.
FIG. 4 is a perspective view of an aft face of the blade assembly of FIG. 3, in accordance with an aspect of the present disclosure.
FIG. 5 is a bottom view of the blade assembly of FIGS. 3-4, showing a bottom surface having inlet passages and an offset plane, in accordance with an aspect of the present disclosure.
FIG. 6 is a cross-sectional view of the blade assembly of FIG. 5 taken along the offset plane and looking in a forward direction, in accordance with an aspect of the present disclosure.

DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

Aspects of the disclosure generally relate to turbine engine dovetails for turbine engine blades, such as cooled turbine engine blades. Traditional dovetails often include a 'neck' or a somewhat variable geometry in order to mount the turbine engine blades to the engine disk. High engine temperatures and operational forces impart large stresses to this 'neck.' Large stresses contribute to an unexpected or premature part replacement due to deterioration in this 'neck' area. Therefore, there is a need for a dovetail with a 'neck' area that withstands the large stresses.

Aspects of the disclosure provide for a dovetail with a specific geometry where the dovetail mounts to the disk. Aspects of the disclosure also provide for a dovetail with a specifically defined neck geometry, providing improved performance under engine stresses.

As used herein, "radius of curvature" is defined where the length of the curvature vector defines the radius = 1/K, where K is the curvature of the curve.

The term redline exhaust gas temperature (referred to herein as "redline EGT") refers to a maximum permitted takeoff temperature documented in a Federal Aviation Administration ("FAA")-type certificate data sheet. For example, in certain exemplary embodiments, the term redline EGT may refer to a maximum permitted takeoff temperature of an airflow after a first stage stator downstream of an HP turbine of an engine that the engine is rated to withstand. The term redline EGT is sometimes also referred to as an indicated turbine exhaust gas temperature or indicated turbine temperature.

A "spaced plane" as used herein is defined as a plane that is spaced from an aft face of the dovetail by a spacing distance. The spaced plane is defined parallel to the aft face of the dovetail, and parallel to and intersecting a passage axis defined by an inlet passage extending through the dovetail.

An "offset plane" as used herein is a plane that is defined as offset from the spaced plane by an offset angle. The offset angle is defined as the angle from which the offset plane is offset from the spaced plane rotated about the passage axis defining the spaced plane.

"N2" as used herein represents a rotational speed for the engine (in revolutions per minute or rpm), which is defined by the rotational speed of the particular dovetail within the engine. "N2" is defined as the redline rotational speed of the turbine engine permitted at takeoff as documented in the FAA-type certificate data sheet.

"L" as used herein is a first radius length. The first radius length is defined as a length of a radius of curvature defined by a first curved surface of a dovetail arranged at a first intervening recess defining a neck for the dovetail. The first radius length "L" is measured along the offset plane.

"U" as used herein is a second radius length. The second radius length is defined as a length of a radius of curvature defined by a second curved surface of a dovetail arranged at a first intervening recess defining a neck for the dovetail. The second radius length "U" is measured along the offset plane.

In certain exemplary embodiments of the present disclosure, a gas turbine engine defining a centerline and a circumferential direction is provided. The gas turbine engine generally includes a rotor assembly and a stator assembly. The rotor assembly and the stator assembly collectively define a substantially annular flow path relative to the centerline of the gas turbine engine. The rotor assembly includes a set of blades. Each blade of the set of blades mounts to a rotor, such as a disk at a dovetail, and the set of blades are distributed circumferentially about the engine centerline mounted to the disk. It is further contemplated that the set of blades can be any number of blades mounted to the disk. The stator assembly includes a set of vanes. The set of vanes extend between inner and outer bands and are distributed circumferentially about the centerline. The set of vanes also defines a set of nozzles. It is further contemplated that the set of vanes includes a single pair of vanes defining a single nozzle. Rotation of the disk causes the set of blades to produce a fluid flow through the set of nozzles. The number of blades and the number of nozzles for a stage are both contributors to controlling a flow across each blade and through the nozzles.

Dovetails include a neck structure, having a relatively thin portion, compared to the remainder of the dovetail, which slidably inserts into the disk to mount each blade to the rotor. This thin neck structure is susceptible to high local stresses due to the extreme engine operational conditions.

In addition, it can be appreciated that multiple local factors have an effect on dovetail durability in an engine environment. These factors include a local radius of curvature at the neck, dovetail lobe number and size, or particular sizing of portions of the dovetail, such as lengths including distance between two points, or an axial distance relative to the engine longitudinal extent. These factors need to be balanced against stringent engine efficiency and spacing requirements. Therefore, providing a detailed geometry for the dovetail that reduces or mitigates stresses on the dovetail while being capable of operation within current disk systems is desirable.

The standard practice for solving the problem of improved dovetail durability has been to use increased sizes or stronger material, which combat local stresses. However, such geometry and materials lead to increased costs, system weight, and overall space occupied by the dovetail. This requires a cost-benefit analysis, which reduces overall engine efficiency, or requires redesign of related components to compensate for the larger or stronger materials. In some cases, such a cost-benefit analysis is impractical or impossible. Therefore, a more intuitive solution is needed, with a greater benefit for systems that are used in existing engines, and without requiring redesign of related components.

The inventors' practice has proceeded in the manner of designing a turbine engine with a dovetail for a blade that is suitable for use in existing systems, while reducing, decreasing, or otherwise improving local stresses. The inventors determined during this practice that by specifying particular dimensions and geometries for portions of the dovetail, such as at the neck area, that these local stresses are reduced, decreased, and otherwise improved. This improvement was realized without requiring increased size or stronger materials, and utilized in existing systems without a redesign or reengineering of related components.

Such local stresses that are reduced, decreased, and otherwise improved may include contour stress, stress concentration, critical crush stress, and stress tangency or a stress tangency point, or any stress being a degree of force imparted to a physical portion or point of the component or dovetail. Contour stress refers to a planar, curved, or line-function representation of stress over an area. Stress concentration refers to a local position with a relatively larger or greater amount of local force relative to a nearby or similar position. Critical crush stress refers to a force value representing a threshold, where exceeding that threshold results in material crushing or deformation. Stress tangency refers to an amount of force defined at a point or line arranged tangent to a relative surface or portion thereof. A load path refers to a physical portion or area of the dovetail defined as a line or directionality upon which a load force is applied and extends through the physical portion of the dovetail. The load path can be represented by the contour stress or stress concentration, where the load path is defined by the contours or concentration having a relatively larger amount of force or stress. Stress imparted as a bending moment refers to the force imparted to a physical portion of the dovetail over a length or area resulting in bending of that physical portion.

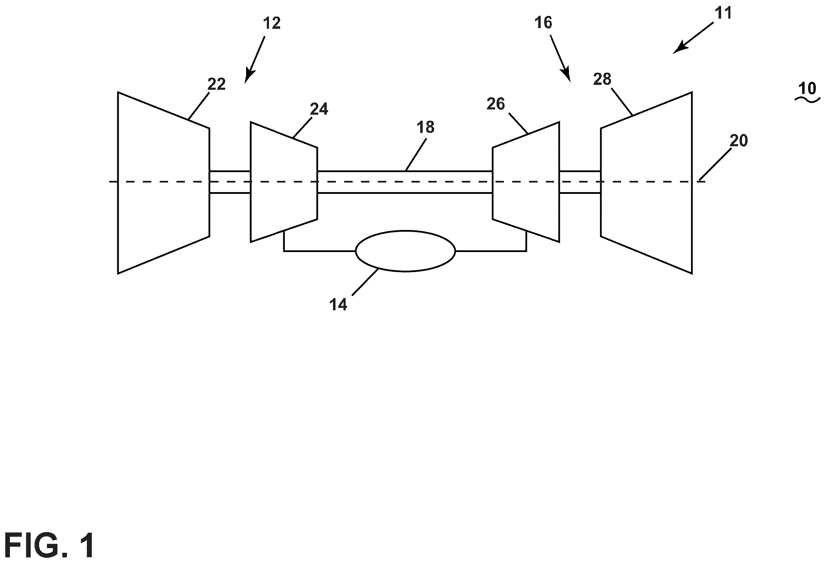

Referring now to the drawings, FIG. 1 is a schematic view of a turbine engine 10. As a non-limiting example, the turbine engine 10 can be used within an aircraft. The turbine engine 10 includes an engine core 11 including, at least, a compressor section 12, a combustor 14, and a turbine section 16. A fan (not shown) provides air to the compressor section 12. A drive shaft 18 rotationally couples the fan, compressor section 12, and turbine section 16, such that rotation of one affects the rotation of the others, and defines a rotational axis or engine centerline 20 for the turbine engine 10.

The compressor section 12 includes a low-pressure (LP) compressor 22 and a high-pressure (HP) compressor 24 serially fluidly coupled to one another. The turbine section 16 includes an HP turbine 26 and an LP turbine 28 serially fluidly coupled to one another. The drive shaft 18 operatively couples the LP compressor 22, the HP compressor 24, the HP turbine 26 and the LP turbine 28 together. In some implementations, the drive shaft 18 includes an LP drive shaft (not illustrated) and an HP drive shaft (not illustrated), where the LP drive shaft couples the LP compressor 22 to the LP turbine 28, and the HP drive shaft couples the HP compressor 24 to the HP turbine 26.

The compressor section 12 includes a plurality of axially spaced stages. Each stage includes a set of circumferentially spaced rotating blades and a set of circumferentially spaced stationary vanes. In one configuration, the compressor blades for a stage of the compressor section 12 are mounted to a disk, which is mounted to the drive shaft 18. Each set of blades for a given stage has its own disk. In one implementation, the vanes of the compressor section 12 are mounted to a casing which extends circumferentially about the turbine engine 10. In a counter-rotating turbine engine, the vanes are mounted to a drum, which is similar to the casing, except the drum rotates in a direction opposite the blades, whereas the casing is stationary. It will be appreciated that the representation of the compressor section 12 is merely schematic and that there can be any number of stages. Further, it is contemplated that there can be any other number of components within the compressor section 12.

Similar to the compressor section 12, the turbine section 16 includes a plurality of axially spaced stages, with each stage having a set of circumferentially spaced, rotating blades and a set of circumferentially spaced, stationary vanes. In one configuration, the turbine blades for a stage of the turbine section 16 are mounted to a disk which is mounted to the drive shaft 18. Each set of blades for a given stage can have its own disk. In one implementation, the vanes of the turbine section are mounted to the casing in a circumferential manner. In a counter-rotating turbine engine, the vanes can be mounted to a drum, which is similar to the casing, except the drum rotates in a direction opposite the blades, whereas the casing is stationary. It is noted that there can be any number of blades, vanes, and turbine stages as the illustrated turbine section is merely a schematic representation. Further, it is contemplated that there can be any other number of components within the turbine section 16.

The combustor 14 is provided serially between the compressor section 12 and the turbine section 16. The combustor 14 is fluidly coupled to at least a portion of the compressor section 12 and the turbine section 16 such that the combustor 14 at least partially fluidly couples the compressor section 12 to the turbine section 16. As a non-limiting example, the combustor 14 is fluidly coupled to the HP compressor 24 at an upstream end of the combustor 14 and to the HP turbine 26 at a downstream end of the combustor 14.

During operation of the turbine engine 10, ambient or atmospheric air is drawn into the compressor section 12 via the fan, upstream of the compressor section 12, where the air is compressed defining a pressurized air. The pressurized air then flows into the combustor 14 where the pressurized air is mixed with fuel and ignited, thereby generating combustion gases. Some work is extracted from these combustion gases by the HP turbine 26, which drives the HP compressor 24 via an HP drive shaft (not illustrated). The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives an LP drive shaft (not illustrated) to rotate the fan and the LP compressor 22. The pressurized airflow and the combustion gases together define a working airflow that flows through the fan, compressor section 12, combustor 14, and turbine section 16 of the turbine engine 10.

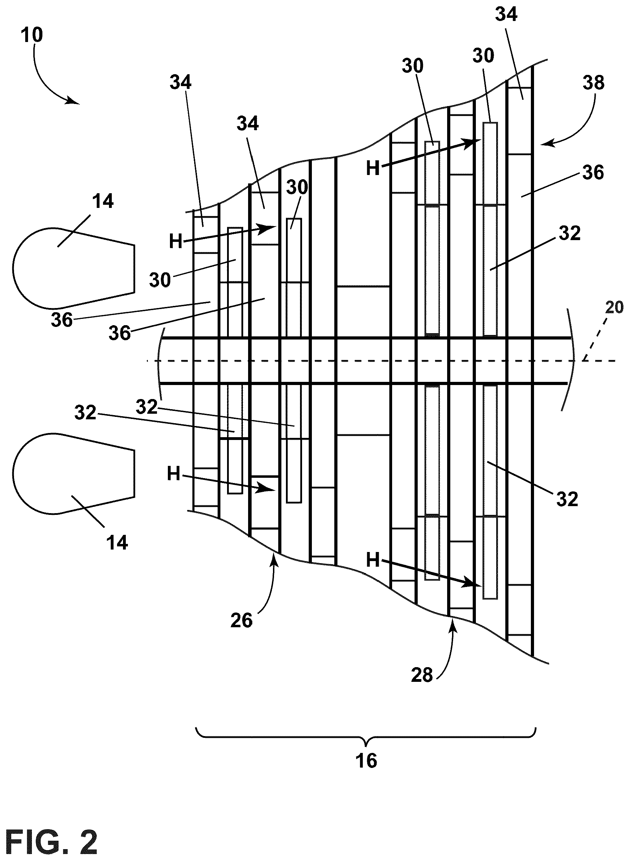

Turning to FIG. 2, a portion of the turbine section 16 is schematically illustrated. The turbine section 16 includes a set of blades 30 circumferentially mounted to corresponding disks 32. Any number of individual blades 30 can be mounted to each disk 32. While shown schematically in FIG. 2, it should be understood that the turbine engine 10 can be a single stage turbine, or can include additional stages as shown.

Vanes 34 are fixedly mounted to a stator ring 36 located radially exterior of each of the disks 32. A nozzle 38 is defined by circumferentially adjacent pairs of the vanes 34. Any number of nozzles 38 can be provided on the stator ring 36. In one exemplary configuration, each disk 32 includes at least sixty (60) blades, including from sixty to seventy (60-70) blades, or up to sixty-four (64) blades, in non-limiting examples. Each stator ring 36 includes at least 38 nozzles 38, including thirty-eight to fifty (38-50) nozzles 38, or up to forty-two (42) nozzles 38, in non-limiting examples. During operation of the turbine engine 10, a flow of hot gas (denoted "H") exits the combustor 14 and enters the turbine section 16.

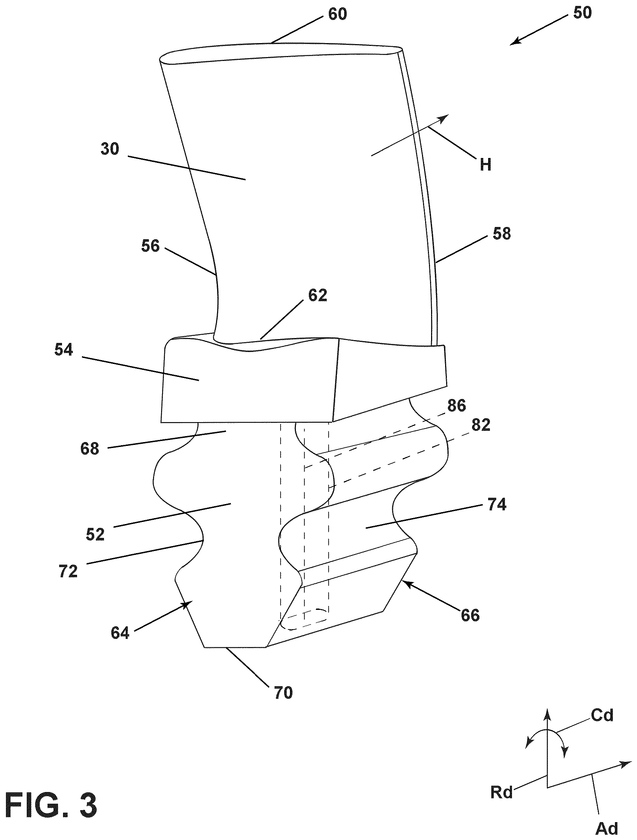

FIG. 3 shows a schematic view of a blade assembly 50 including an airfoil 48, which can be a blade that is used in the turbine engine 10 (FIG. 1) and as one blade of the set of blades 30 (FIG. 2). The blade assembly 50 further includes a dovetail 52 and a platform 54, with the platform 54 connecting the airfoil 48 to the dovetail 52. The airfoil 48 includes a leading edge 56 and a trailing edge 58 defining a chord-wise direction therebetween, and includes a tip 60 and a root 62 defining a span-wise direction therebetween. The blade assembly 50 includes a forward face 64 adjacent the leading edge 56 and an aft face 66 adjacent the trailing edge 58. The dovetail 52 further includes a shank 68, which connects the dovetail 52 to the platform 54. The dovetail 52 includes a bottom surface 70 which extends between the forward face 64 and the aft face 66, and includes a first side 72 and a second side 74 spacing the forward face 64 from the aft face 66. An inlet passage 82 extends through the dovetail 52 to feed internal cooling circuits within the airfoil 48. The inlet passage 82 defines a passage axis 86 extending longitudinally through the inlet passage 82.

The dovetail 52 mounts to the disk 32 (FIG. 2) in order to rotatably drive the airfoil 48. Materials used to form the dovetail 52 or related structures include, but are not limited to, steel, refractory metals such as titanium, or superalloys based on nickel, cobalt, or iron, ceramic matrix composites, or combinations thereof. The structures can be formed by a variety of methods, including additive manufacturing, casting, electroforming, or direct metal laser melting, in non-limiting examples.

Additionally, a set of axes are included in FIG. 3 to aid in the reader's orientation of the blade assembly 50 within the turbine engine 10 of FIG. 1. An axial direction denoted "Ad" extends axially in a direction extending between forward and aft, and is arranged parallel to the engine centerline 20 of FIG. 1. A radial direction denoted "Rd" extends perpendicular to the engine centerline 20. In a non-limiting example, the passage axis 86 can be arranged parallel to the radial direction Rd (FIG. 3), while an angular deviation therefrom is contemplated. A circumferential direction denoted "Cd" can be defined as a circumference about the engine centerline 20 at a particular radial distance. Additionally, a flow of hot gas H passes along the airfoil 48. The flow of hot gas H extends generally in the axial direction Ad, from forward to aft, while the local directionality can vary being driven or turned by blades or vanes.

The airfoil 48 defines a blade centroid as a center of mass of the blade. The blade centroid is used to balance the blade when operating, as centrifugal forces resulting from engine rotation during operation create bending moments resulting from the gas stream forces passing along the blade. Deviance from this force balance can result in increased blade and disk stresses, which are shared or imparted along the dovetail 52, as well as reduced component durability requiring additional maintenance.

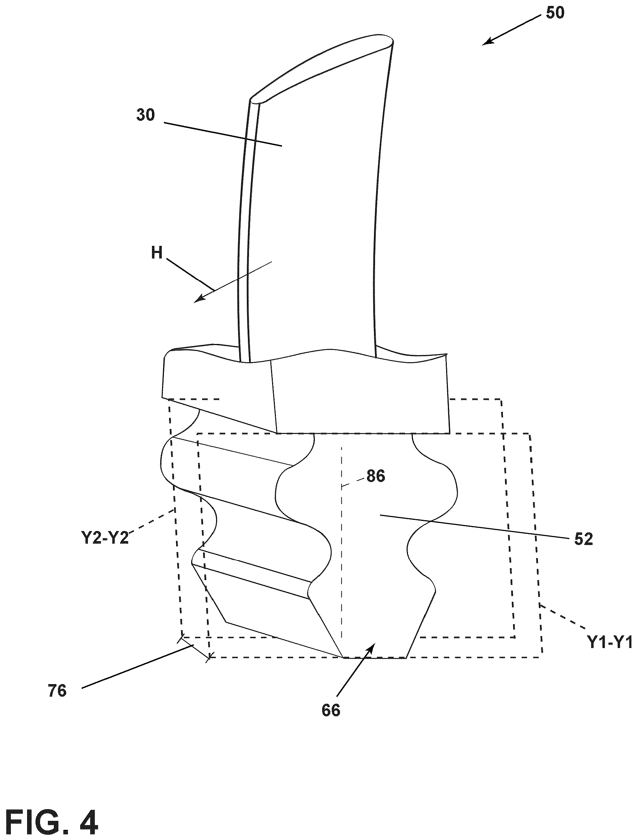

Referring to FIG. 4, showing the aft face 66 of the blade assembly 50, the dovetail 52 defines a first plane Y1-Y1 defined along the aft face 66 of the dovetail 52. A spaced plane Y2-Y2 is positioned forward of and spaced from the aft face 66 by a spacing distance 76, and arranged parallel to the aft face 66. In a non-limiting example, the spacing distance 76 can be 0.275 inches (0.6985 cm), while any suitable spacing distance is contemplated. The spacing distance 76 is defined such that the spaced plane Y2-Y2 is parallel to and intersects the passage axis 86.

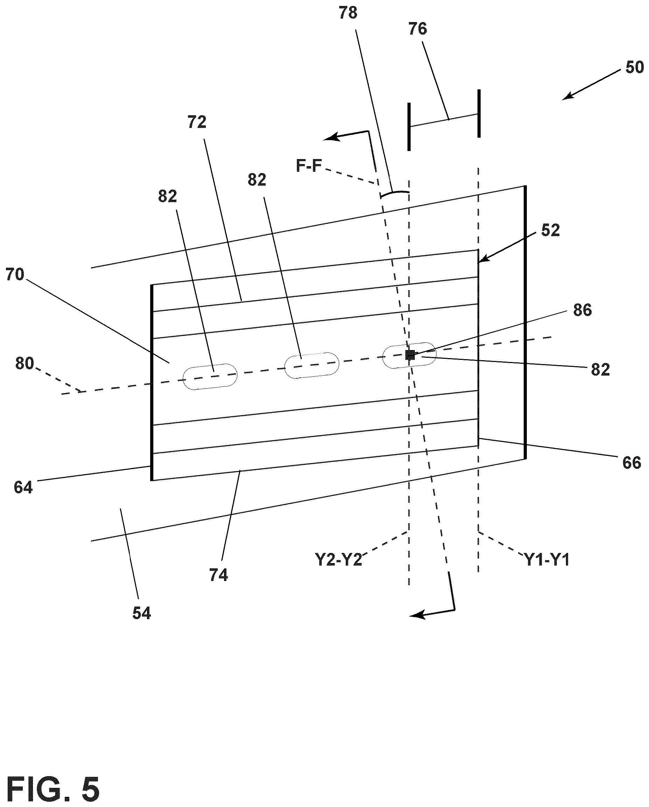

FIG. 5 shows a bottom view of the blade assembly 50 and the bottom surface 70 of the dovetail 52. As can be appreciated, the spacing distance 76 aligns with the passage axis 86 for the inlet passage 82. An offset plane F-F is defined intersecting and offset from the spaced plane Y2-Y2 at an offset angle 78. The offset plane F-F is defined by rotating the spaced plane Y2-Y2 about the passage axis 86 at the offset angle 78. The offset angle 78 is 10-degrees.

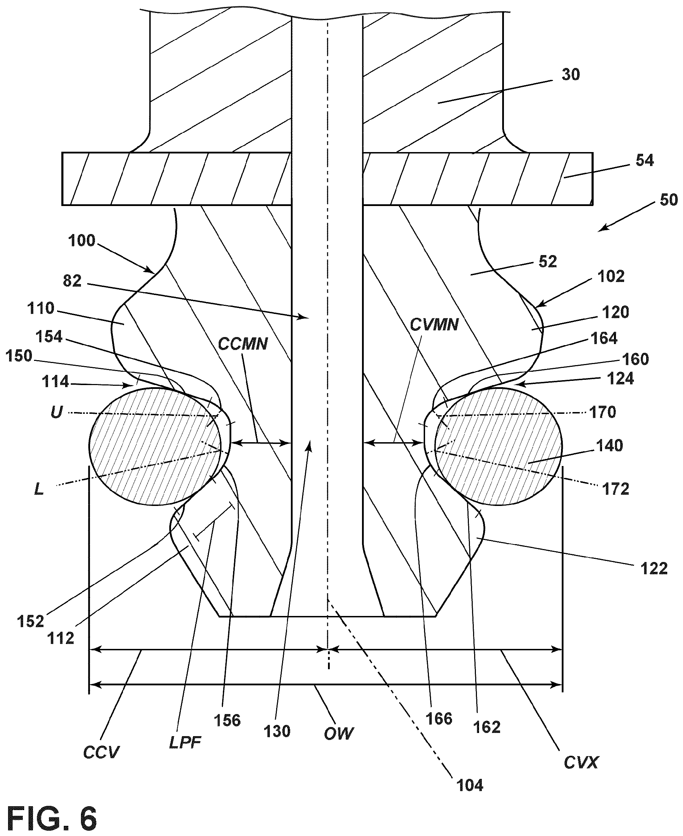

FIG. 6 is a schematic cross-sectional view of the blade assembly 50 showing the section that corresponds to the offset plane F-F of FIG. 5 and looking in a direction from aft to forward, to better detail the geometry of the dovetail 52. The inlet passage 82 effectively separates the dovetail 52 into a first portion 100 and a second portion 102. It is contemplated that the first portion 100 and the second portion 102 can be symmetric, relative to the passage axis 86, while non-symmetric embodiments are contemplated.

The first portion 100 includes a first upper lobe 110 and a first lower lobe 112, defining a first intervening recess 114 therebetween. Similarly, the second portion 102 includes a second upper lobe 120 and a second lower lobe 122, defining a second intervening recess 124 therebetween. The first and second intervening recesses 114, 124 collectively define a neck 130 with the inlet passage 82.

A gage pin 140 is shown provided within each of the first and second intervening recesses 114, 124. The gage pin 140 is used for measuring tolerances during or after manufacture by positioning the gage pin 140 within the first intervening recess 114 and the second intervening recess 124, and is removed for installation of the airfoil 48 and dovetail 52 within an engine. In one non-limiting example, the gage pin 140 is a 0.165 in gage pin (4.191 millimeters). The gage pin 140 is positioned to contact the dovetail 52 at the first and second intervening recesses 114, 124, and ultimately removed for installation and use within an engine structure.

A first planar surface 152 partially defines the first lower lobe 112 and the first intervening recess 114, and a second planar surface 150 partially defines the first upper lobe 110 and the first intervening recess 114. A first curved surface 156 extends from the first planar surface 152 and partially defines the first intervening recess 114. A second curved surface 154 extends between the second planar surface 150 and the first curved surface 156, and partially defines the first intervening recess 114. The first curved surface 156 extends between the first planar surface 152 and the second curved surface 154. The first curved surface 156 can begin where the first planar surface 152 ceases its planar shape and the curvature of the first curved surface 156 begins. The first curved surface 156 is positioned tangential to the first planar surface 152. The first curved surface 156 is positioned tangential to the second curved surface 154, and the second curved surface 154 is positioned tangential to the second planar surface 150. The first planar surface 152 extends between the forward and aft faces 64, 66 (FIG. 5), and between the first curved surface 156 and a lower curved surface 158. The bounds for the first planar surface 152 are defined by the planar areas of the first planar surface 152, terminating where the curvatures for the first curved surface 156 and the lower curved surface 158 begin. The first curved surface 156 extends between the first planar surface 152 and the second curved surface 154, and extends between the forward and aft faces 64, 66 (FIG. 5).

The first curved surface 156 has a constant radius of curvature that defines a first radius length $L$ and the second curved surface 154 has a constant radius of curvature that defines a second radius length $U$. The first radius length $L$ and the second radius length $U$ are measured along the offset plane F-F. It is contemplated that the second radius length $U$ is the same or different from the first radius length $L$.

The second intervening recess 124 for the second portion 102 is partially defined by a third planar surface 160 and a fourth planar surface 162. The third planar surface 160 partially defines the second upper lobe 120, and the fourth planar surface 162 partially defines the second lower lobe 122.

A third curved surface 164 partially defines the second intervening recess 124 extending from the third planar surface 160 to a fourth curved surface 166. The fourth curved surface 166 extends between the third curved surface 164 and the fourth planar surface 162. The third curved surface 164 is arranged tangent to the third planar surface 160. The third curved surface 164 is arranged tangent to the fourth curved surface 166, and the fourth curved surface 166 is tangent to the fourth planar surface 162. The third curved surface 164 has a constant radius of curvature that defines a third radius 170, and the fourth curved surface 166 has a constant radius of curvature that defines a fourth radius 172. It is contemplated that there can be no third curved surface 164, and the fourth curved surface 166 extends fully between the third planar surface 160 and the fourth planar surface 162. In such an example, the fourth curved surface 166 is arranged tangent to the third and fourth planar surfaces 160, 162.

It should be appreciated that the planar surfaces are shown in cross section, and that the planar description relates to the cross-sectional view shown in FIG. 3. Therefore, it should be understood that this description is written toward a cross-section of a three-dimensional geometry.

During manufacture, particular geometries at tight tolerances for the dovetail 52 are required. Therefore, a balance must be maintained between increasing durability and stress resistance at the neck 130, while maintaining operational minimum requirements, as well as capability of use within current engine systems.

Finding a workable solution to the neck durability problem, as well as related blade-rotor interface balanced with overall system durability, weight, size, and/or cost, involves finding the balance between the length and size of the first upper and lower lobes 110, 112, the thickness of the first intervening recess 114 at the neck 130, as well as the local radiuses of curvature extending between the lengths defined along the first upper and lower lobes 110, 112.. Put another way, the dovetail 52, and geometries thereof, were selected accordingly for various dovetail configurations while the inventors developed a range of particular geometries that satisfies design requirements including, aerodynamic performance, stress mitigation, rigidity, durability, thermal stresses, engine efficiency, and sizing constraints within current engine systems.

The geometries defining the dovetail mitigate or reduce local stresses, while remaining within engine system operating constraints.

Table 1 below provides geometries for the dovetail 52, with each example dovetail geometry created by the inventors and including differing values that yielded workable solutions to the problem as described above, and with reference to FIG. 6.

**Table 1**

| Parameter: | $L$ | $U$ | EGT | N2 |
|---|---|---|---|---|
| Units: | m | m | °C | Hz |
| Example 1 | 0.001016 | 0.001778 | 980 | 233.0 |
| Example 2 | 0.001981 | 0.001778 | 920 | 267.0 |
| Example 3 | 0.001269 | 0.001304 | 929.9 | 261.5 |
| Example 4 | 0.001894 | 0.001156 | 943.9 | 243.2 |
| Example 5 | 0.001867 | 0.001378 | 938 | 252.1 |

(continued)

| Parameter: | L | U | EGT | N2 |
|---|---|---|---|---|
| Units: | m | m | °C | Hz |
| Example 6 | 0.001392 | 0.001704 | 943.6 | 233.1 |
| Example 7 | 0.001922 | 0.000970 | 928.3 | 250.7 |
| Example 8 | 0.001962 | 0.000827 | 971.5 | 250.8 |
| Example 9 | 0.001904 | 0.000930 | 956.2 | 259.3 |
| Example 10 | 0.001981 | 0.000538 | 946.6 | 236.7 |

A first radius length $L$ is defined as the radius of curvature for the first curved surface 156 taken along the offset plane F-F (FIG. 5). The first length $LPF$ is measured as the distance between the first curved surface 156 and the lower curved surface 158 taken along the offset plane F-F.

A second radius length $U$ is defined as the radius of curvature for the second curved surface 154 taken along the offset plane F-F (FIG. 5.

The examples of Table 1 illustrate dovetail designs developed by the inventors that result in reduction and mitigation of local dovetail stresses. Furthermore, such reduction and mitigation are realized while fitting within size and weight constraints for existing systems, as well as accounting for the fitting requirements of a mating rotor design thereof.

The inventors determined that there is a relationship between the curvature of the first curved surface 156 defining the first radius length $L$ and the radius of curvature or the second radius length $U$ defined by the second curved surface 154. The curvatures for the first and second curved surfaces 154, 156 are selected to vary the thicknesses at the neck 130. The inventors determined that reducing the required minimum thickness at the neck 130 reduces overall weight, without sacrificing resiliency, when utilizing the first radius length $L$ defined by the first curved surface 156 and the radius of curvature or the second radius length $U$ defined by the second curved surface 154, as described herein.

Furthermore, the inventors determined that there is a relationship between the first radius length $L$, the second radius length $U$, and the dovetail contour stress or stress concentration, as well as its particular load path. More specifically, the geometry of the first planar surface 152 is used to control the stress concentration or contour within the dovetail 52, which mitigates such stress by varying the first planar surface 152. The first radius length $L$ and the second radius length $U$ affects the local strength and stiffness of the first upper lobe 110, which relates to local stress concentration, path, and contour. The inventors determined that varying the geometry of the first curved surface 156, the second curved surface 154, or both, varies the position of local stress concentration, load path, or contour, which can be adapted to a structurally stronger area and/or to areas better-suited to bear those stresses through such variation.

The dovetail designs of Table 1 provide working solutions with a desired degree of thermal and operational efficiency for specific engine configurations. The inventors found that modifying dovetail geometries, within particular described ranges, results in a highly useful and desirable dovetail geometry with respect to stress reduction, determining load path, defining stress contour concentration, critical crush stress and tangency points, determining blade centroid location and improving overall balance, with reduced related loading on one or both of the disk and dovetail, increased durability and cycle life for the blade for particular engine configurations, as well as maintaining appropriate sizing and tolerances for use in existing engine or disk systems. The improved, beneficial designs created by the inventors can be characterized according to certain expressions, labeled herein as EQ1 discussed herein. The ranges associated with EQ1 were unexpectedly found to identify an improved dovetail design, better suited for a particular engine operating environment and taking into account the constraints imposed on dovetail design for an airfoil used in such a system.

A first Expression, referred to herein as *"EQ1"*, is defined as Expression (1):

$$EQ1 = \left( \left( \frac{L}{0.0015\ m} \right)^4 * \left( \frac{1}{e^{\left(\frac{U}{1\ m}\right)}} \right) \right)^2 * \left( \frac{\left(\frac{N2}{250\ Hz}\right)^{\frac{1}{2}}}{\left(\frac{EGT}{950\ °C}\right)^{\frac{1}{2}}} \right) \qquad (1).$$

$L$ represents the length of a radius of curvature defined by the first curved surface 156. $U$ represents the length of a radius of curvature defined by the second curved surface 154. $N2$ is defined as the redline rotational speed of the turbine engine permitted at takeoff as documented in the FAA-type certificate data sheet. $EGT$ is the redline maximum permitted takeoff temperature documented in a Federal Aviation Administration ("FAA")-type certificate data sheet.

Table 2 provided below provides values for Expression 1 for the Examples 1-10 taken from Table 1.

**Table 2**

| Parameter: | L | U | EGT | N2 | EQ1 |
|---|---|---|---|---|---|
| Units: | m | m | °C | Hz | - |
| **Example 1** | 0.001016 | 0.001778 | 980 | 233.0 | 0.0420 |
| **Example 2** | 0.001981 | 0.001778 | 920 | 267.0 | 9.6918 |
| **Example 3** | 0.001269 | 0.001304 | 929.9 | 261.5 | 0.2703 |
| **Example 4** | 0.001894 | 0.001156 | 943.9 | 243.2 | 6.3725 |
| **Example 5** | 0.001867 | 0.001378 | 938.0 | 252.1 | 5.7948 |
| **Example 6** | 0.001392 | 0.001704 | 943.6 | 233.1 | 0.5304 |
| **Example 7** | 0.001922 | 0.000970 | 928.3 | 250.7 | 7.3582 |
| **Example 8** | 0.001962 | 0.000827 | 971.5 | 250.8 | 8.4560 |
| **Example 9** | 0.001904 | 0.000930 | 956.2 | 259.3 | 6.8404 |
| **Example 10** | 0.001981 | 0.000538 | 946.6 | 236.7 | 8.9937 |

As such, the improved dovetail designs created by the inventors, represented by examples in Tables 1 and 2, can be characterized by *Expression 1* within certain values, which correlate to a high performing dovetail with peak performance utilizing the factors discussed herein. The designs of Table 2 fall within a range of 0.042 and 9.6918 for *Expression 1* that results in the dovetail 52 with structural integrity, while remaining within desired tolerances and capable of use in existing engine systems.

Table 3 below illustrates non-limiting configurations for the dovetail 52, showing minimum and maximum value ranges for the dovetail 52. A range is defined between (inclusive of endpoints) and is labelled as a "Min" representing a minimum value and a "Max" representing a maximum value.

**Table 3**

| Parameter: | Min: | Max: | Units: |
|---|---|---|---|
| L | 0.001016 | 0.001981 | Length (m) |
| U | 0.0.00508 | 0.001778 | Length (m) |
| EGT | 920 | 980 | Degrees Celsius (°C) |
| N2 | 233.0 | 267.0 | Hertz (Hz) |
| EQ1 | 0.042 | 9.6918 | - |

The stresses imparted to a dovetail within the ranges of Table 3 provide for stresses that are less than stresses experienced by designs outside of such ranges. Therefore, such a dovetail within the ranges of Table 3 provides for increased durability, lifetime, and reduced maintenance as compared with designs outside of the ranges.

Benefits for the dovetail 52 within the values for *Expression 1* include a reduction in stress on the dovetail 52 at the neck 130, which reduces a time between a need for replacement parts and increases the lifetime of the dovetail 52. This provides for increased durability for the dovetail 52, which decreases required maintenance and costs, while increasing overall engine reliability.

Furthermore, the benefits included herein provide for a dovetail 52 that fits within existing engines. For example, the values for Table 1 as provided herein take existing engines into consideration, permitting replacement of current dovetails with replacement dovetails (or new dovetails) having the parameters of the dovetail 52 described herein. Such consideration provides for replacing and improving current engine systems without requiring the creation of new disks capable of mounting to the dovetail 52. This provides for improving current engine durability without increasing costs to prepare new engines or further adapt existing engines.

To the extent one or more structures provided herein can be known in the art, it should be appreciated that the present disclosure can include combinations of structures not previously known to combine, at least for reasons based in part on conflicting benefits versus losses, desired modes of operation, or other forms of teaching away in the art.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and can include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects of the disclosure are provided by the subject matter of the following clauses:

A turbine engine (10), comprising: an engine core (11) extending along an engine centerline (20) and including a compressor section (12), a combustor (14) generating hot combustion gases at a redline exhaust gas temperature (EGT), and a turbine section (16) in serial flow arrangement, wherein the redline exhaust gas temperature (EGT) is between 920 °C and 980 °C; a disk (32) provided within the engine core (11) and rotatable about the engine centerline (20); and a blade assembly (50) comprising a dovetail (52) mounted to the disk (32) and rotatable by the disk (32) at a redline rotational speed (N2), wherein the redline rotation speed is between 233.0 Hz and 267.0 Hz, and wherein the dovetail (52) comprises: an aft face (66); an inlet passage (82) extending through the dovetail (52) and defining a passage axis (86), wherein the inlet passage (82) is positioned such that the passage axis (86) is spaced from the aft face (66) by a spacing distance (76) of 0.275 in; a first portion (100) including a first upper lobe (110), a first lower lobe (112), and a first intervening recess (114) between the first upper lobe (110) and the first lower lobe (112); a first curved surface (156) partially defining the first lower lobe (112) and the first intervening recess (114); and a second curved surface (154) partially defining the first upper lobe (110) and the first intervening recess (114); wherein a spaced plane (Y2-Y2) is defined parallel to the aft face (66) and parallel to and intersecting the passage axis (86); wherein an offset plane (F-F) is defined offset from the spaced plane (Y2-Y2) by 10-degrees rotated about the passage axis (86); wherein a first radius length (L) is defined as a radius of curvature of the first curved surface (156) measured along the offset plane (F-F), wherein the first radius length (L) is between 0.001016 m and 0.001981 m; and wherein a second radius length (U) is defined as a radius of curvature of the second curved surface (154) measured along the offset plane (F-F), wherein the second radius length (U) is between 0.000508 m and 0.001778 m; wherein the redline exhaust gas temperature (EGT), the redline rotational speed (N2), the first radius length (L), and the second radius length (U), define a first value (EQ1) by the following expression:

$$EQ1 = \left( \left( \frac{L}{0.0015\ m} \right)^4 * \left( \frac{1}{e^{\left( \frac{U}{1\ m} \right)}} \right) \right)^2 * \left( \frac{\left( \frac{N2}{250\ Hz} \right)^{\frac{1}{2}}}{\left( \frac{EGT}{950\ ℃} \right)^{\frac{1}{2}}} \right);$$

and wherein the first value (EQ1) is between 0.0420 and 9.6918.

The turbine engine (10) of any preceding clause, further comprising a first planar surface (152) extending from the first curved surface (156) opposite of the second curved surface (154).

The turbine engine (10) of any preceding clause, further comprising a second planar surface (150) extending from the second curved surface (154) opposite of the first curved surface (156).

The turbine engine (10) of any preceding clause, wherein the second radius length (U) is different from the first radius length (L).

The turbine engine (10) of any preceding clause, further comprising a second portion (102) including a second upper lobe (120), a second lower lobe (122), and a second intervening recess (124) between the second upper lobe (120) and the second lower lobe (122).

The turbine engine (10) of any preceding clause, wherein the first intervening recess (114) is sized to receive a gage pin (140).

The turbine engine of any preceding clause, wherein the gage pin (140) is a 0.165 in gage pin.

A dovetail (52) for a blade assembly (50) for a turbine engine (10) generating hot combustion gases at a redline exhaust gas temperature (EGT) between 920 °C and 980 °C, wherein the turbine engine (10) includes a disk (32) provided within an engine core (11) rotatable about an engine centerline (20), and the disk (32) rotatable at a redline rotational speed (N2) for the turbine engine between 233.0 Hz and 267.0 Hz, the dovetail (52) comprising: an aft face (66); an inlet passage (82) extending through the dovetail (52) and defining a passage axis (86), wherein the inlet passage (82) is positioned such that the passage axis (86) is spaced from the aft face (66) by a spacing distance (76) of 0.275 in; a first portion (100) including a first upper lobe (110), a first lower lobe (112), and a first intervening recess (114) between the first upper lobe (110) and the first lower lobe (112); a first curved surface (156) partially defining the first lower lobe (112) and the first intervening recess (114); a second curved surface (154) partially defining the first upper lobe (110) and the first intervening recess (114); wherein a spaced plane (Y2-Y2) is defined parallel to the aft face (66) and parallel to and intersecting the passage axis (86); wherein an offset plane (F-F) is defined offset from the spaced plane (Y2-Y2) by 10-degrees rotated about the passage axis (86); wherein a first radius length (L) is defined as a radius of curvature of the first curved surface (156) measured along the offset plane (F-F), wherein the first radius length (L) is between 0.001016 m and 0.001981 m; and wherein a second radius length (U) is defined as a radius of curvature of the second curved surface (154) measured along the offset plane (F-F), wherein the second radius length (U) is between 0.000508 m and 0.001778 m; wherein the redline exhaust gas temperature (EGT), the redline rotational speed (N2), the first radius length (L), and the second radius length (U), define a first value (EQ1) by the following expression:

$$EQ1 = \left( \left( \frac{L}{0.0015 \, m} \right)^4 * \left( \frac{1}{e^{\left( \frac{U}{1 \, m} \right)}} \right) \right)^2 * \left( \frac{\left( \frac{N2}{250 \, Hz} \right)^{\frac{1}{2}}}{\left( \frac{EGT}{950 \, °C} \right)^{\frac{1}{2}}} \right);$$

and wherein the first value (EQ1) is between 0.0420 and 9.6918.

The dovetail (52) of any preceding clause, wherein the first intervening recess (114) is sized to receive a gage pin (140), and wherein the gage pin (140) is a 0.165 in gage pin.

A turbine engine, comprising:

an engine core extending along an engine centerline and including a compressor section, a combustor generating hot combustion gases at an exhaust gas temperature (*EGT*), and a turbine section in serial flow arrangement;
a disk provided within the engine core and rotatable about the engine centerline; and
a blade assembly comprising a dovetail mounted to the disk and rotatable by the disk at a core speed (*N2*), and an inlet passage extending through the dovetail defining a passage axis, wherein the dovetail comprises:

an aft face;
a spaced plane defined parallel to the aft face and parallel to the passage axis;
an offset plane defined offset from the spaced plane by 10-degrees rotated about the passage axis;
a first portion including a first upper lobe, a first lower lobe, and a first intervening recess between the first upper lobe and the first lower lobe;
a first curved surface at least partially defining the first lower lobe and the first intervening recess;
a second curved surface at least partially defining the first upper lobe and the first intervening recess;
a first radius length (*L*) defined as a radius of a curvature of the first curved surface along the offset plane; and
a second radius length (*U*) defined as a radius of a curvature of the second curved surface along the offset plane;
wherein the exhaust gas temperature (*EGT*), the core speed (*N2*), the first radius length (*L*), and the second radius length (*U*), define a first value (*EQ1*) by the following expression:

$$EQ1 = \left( \left( \frac{L}{0.0015 \, m} \right)^4 * \left( \frac{1}{e^{\left( \frac{U}{1 \, m} \right)}} \right) \right)^2 * \left( \frac{\left( \frac{N2}{250 \, Hz} \right)^{\frac{1}{2}}}{\left( \frac{EGT}{950 \, °C} \right)^{\frac{1}{2}}} \right);$$

and
wherein the first value (*EQ1*) is between 0.0420 and 9.6918.

The turbine engine of any preceding clause, further comprising first planar portion extending from the first curved surface opposite of the second curved surface.

The turbine engine of any preceding clause, further comprising a second planar surface extending from the second curved surface opposite of the first curved surface.

The turbine engine of any preceding clause, wherein the second radius length (*U*) is different from the first radius length (*L*).

The turbine engine of any preceding clause, further comprising a second portion including a second upper lobe, a second lower lobe, and a second intervening recess between the second upper lobe and the second lower lobe.

The turbine engine of any preceding clause, wherein the first intervening recess is sized to receive a gage pin, and wherein the gage pin is a 0.165 in gage pin.

The turbine engine of any preceding clause, wherein the first radius length (*L*) is between 0.001016 m and 0.001981 m.

The turbine engine of any preceding clause, wherein the second radius length (*U*) is between 0.000508 m and 0.001778 m.

The turbine engine of any preceding clause, wherein the core speed (*N2*) is between 233.0 Hz and 267.0 Hz and the exhaust gas temperature (*EGT*) is between 920 °C and 980 °C.

A blade assembly for a turbine engine generating hot combustion gases at an exhaust gas temperature (*EGT*), wherein the turbine engine includes a disk provided within an engine core rotatable about an engine centerline, and the disk rotatable at a core speed (*N2*) for the turbine engine, the blade comprising:

a dovetail having an inlet passage defining a passage axis, the dovetail comprising:

a first portion including a first upper lobe, a first lower lobe, and a first intervening recess between the first upper lobe and the first lower lobe;
a first curved surface at least partially defining the first lower lobe and the first intervening recess;
a second curved surface at least partially defining the first upper lobe and the first intervening recess;
a first radius length ($L$) defined as a radius of a curvature of the first curved surface; and
a second radius length ($U$) defined as a radius of a curvature of the second curved surface;
wherein the exhaust gas temperature ($EGT$), the core speed ($N2$), the first radius length ($L$), and the second radius length ($U$), define a first value ($EQ1$) by the following expression:

$$EQ1 = \left( \left( \frac{L}{0.0015\,m} \right)^4 * \left( \frac{1}{e^{\left( \frac{U}{1\,m} \right)}} \right) \right)^2 * \left( \frac{\left( \frac{N2}{250\,Hz} \right)^{\frac{1}{2}}}{\left( \frac{EGT}{950\,°C} \right)^{\frac{1}{2}}} \right);$$

and
wherein the first value ($EQ1$) is between 0.0420 and 9.6918.

The blade assembly of any preceding clause, wherein the dovetail includes a forward face and an aft face, the dovetail defines a first plane along the aft face, and the dovetail defines a spaced plane parallel to and spaced from the first plane.

The blade assembly of any preceding clause, wherein the spaced plane is aligned with the passage axis.

The blade assembly of any preceding clause, further comprising an offset plane, the offset plane being offset from the spaced plane by an offset angle pivoted about the passage axis, wherein the offset plane defines a section through the dovetail, wherein the first portion, and the first curved surface, and the second curved surface are defined along the offset plane.

The blade assembly of any preceding clause, wherein the offset angle is 10-degrees.

The blade assembly of any preceding clause, wherein the first plane is spaced from the second plane by 0.275 in.

The blade assembly of any preceding clause, wherein the first intervening recess is sized to receive a gage pin, and wherein the gage pin is a 0.165 in gage pin.

The blade assembly of any preceding clause, wherein the first radius length ($L$) is between 0.001016 m and 0.001981 m.

The blade assembly of any preceding clause, wherein the second radius length ($U$) is between 0.000508 m and 0.001778 m.

The blade assembly of any preceding clause, wherein the rotation speed ($N2$) is between 233.0 Hz and 267.0 Hz.

The blade assembly of any preceding clause, wherein the exhaust gas temperature ($EGT$) is between 920 °C and 980 °C.

A turbine engine, comprising:

an engine core extending along an engine centerline and including a compressor section, a combustor generating hot combustion gases at an exhaust gas temperature ($EGT$) between 920 °C and 980 °C, and a turbine section in serial flow arrangement;
a disk provided within the engine core and rotatable about the engine centerline; and
a blade assembly comprising a dovetail mounted to the disk and rotatable by the disk at a core speed ($N2$) between 233.0 Hz and 267.0 Hz, and an inlet passage extending through the dovetail defining a passage axis, wherein the dovetail comprises:

an aft face;
a spaced plane defined parallel to the aft face and parallel to the passage axis, the spaced plane spaced from the aft face by 0.275 in;
an offset plane defined offset from the spaced plane by 10-degrees rotated about the passage axis;
a first portion including a first upper lobe, a first lower lobe, and a first intervening recess between the first upper lobe and the first lower lobe;
a first curved surface at least partially defining the first lower lobe and the first intervening recess;
a second curved surface at least partially defining the first upper lobe and the first intervening recess;
a first radius length ($L$) defined as a radius of a curvature of the first curved surface along the offset plane, wherein the first radius length ($L$) is between 0.001016 m and 0.001981 m; and

a second radius length (*U*) defined as a radius of a curvature of the second curved surface along the offset plane, wherein the second radius length (*U*) is between 0.000508 m and 0.001778 m;
wherein the exhaust gas temperature (*EGT*), the core speed (*N2*), the first radius length (*L*), and the second radius length (*U*), define a first value (*EQ1*) by the following expression:

$$EQ1 = \left( \left( \frac{L}{0.0015\ m} \right)^4 * \left( \frac{1}{e^{\left( \frac{U}{1\ m} \right)}} \right) \right)^2 * \left( \frac{\left( \frac{N2}{250\ Hz} \right)^{\frac{1}{2}}}{\left( \frac{EGT}{950\ ^\circ C} \right)^{\frac{1}{2}}} \right);$$

and wherein the first value (*EQ1*) is between 0.0420 and 9.6918.

**Claims**

1. A turbine engine (10), comprising:

    an engine core (11) extending along an engine centerline (20) and including a compressor section (12), a combustor (14) generating hot combustion gases at a redline exhaust gas temperature (*EGT*), and a turbine section (16) in serial flow arrangement, wherein the redline exhaust gas temperature (*EGT*) is between 920 °C and 980 °C;
    a disk (32) provided within the engine core (11) and rotatable about the engine centerline (20); and
    a blade assembly (50) comprising a dovetail (52) mounted to the disk (32) and rotatable by the disk (32) at a redline rotational speed (*N2*), wherein the redline rotation speed is between 233.0 Hz and 267.0 Hz, and wherein the dovetail (52) comprises:

        an aft face (66);
        an inlet passage (82) extending through the dovetail (52) and defining a passage axis (86), wherein the inlet passage (82) is positioned such that the passage axis (86) is spaced from the aft face (66) by a spacing distance (76) of 0.275 in;
        a first portion (100) including a first upper lobe (110), a first lower lobe (112), and a first intervening recess (114) between the first upper lobe (110) and the first lower lobe (112);
        a first curved surface (156) partially defining the first lower lobe (112) and the first intervening recess (114); and
        a second curved surface (154) partially defining the first upper lobe (110) and the first intervening recess (114);

    wherein a spaced plane (Y2-Y2) is defined parallel to the aft face (66) and parallel to and intersecting the passage axis (86);
    wherein an offset plane (F-F) is defined offset from the spaced plane (Y2-Y2) by 10-degrees rotated about the passage axis (86);
    wherein a first radius length (*L*) is defined as a radius of curvature of the first curved surface (156) measured along the offset plane (F-F), wherein the first radius length (*L*) is between 0.001016 m and 0.001981 m; and
    wherein a second radius length (*U*) is defined as a radius of curvature of the second curved surface (154) measured along the offset plane (F-F), wherein the second radius length (*U*) is between 0.000508 m and 0.001778 m;
    wherein the redline exhaust gas temperature (*EGT*), the redline rotational speed (*N2*), the first radius length (*L*), and the second radius length (*U*), define a first value (*EQ1*) by the following expression:

$$EQ1 = \left( \left( \frac{L}{0.0015\ m} \right)^4 * \left( \frac{1}{e^{\left( \frac{U}{1\ m} \right)}} \right) \right)^2 * \left( \frac{\left( \frac{N2}{250\ Hz} \right)^{\frac{1}{2}}}{\left( \frac{EGT}{950\ ^\circ C} \right)^{\frac{1}{2}}} \right);$$

    and
    wherein the first value (*EQ1*) is between 0.0420 and 9.6918.

2. The turbine engine (10) of claim 1, further comprising a first planar surface (152) extending from the first curved surface (156) opposite of the second curved surface (154).

3. The turbine engine (10) of any preceding claim, further comprising a second planar surface (150) extending from the second curved surface (154) opposite of the first curved surface (156).

4. The turbine engine (10) of any preceding claim, wherein the second radius length (*U*) is different from the first radius length (*L*).

5. The turbine engine (10) of any preceding claim, further comprising a second portion (102) including a second upper lobe (120), a second lower lobe (122), and a second intervening recess (124) between the second upper lobe (120) and the second lower lobe (122).

6. The turbine engine (10) of any preceding claim, wherein the first intervening recess (114) is sized to receive a gage pin (140).

7. The turbine engine of claim 6, wherein the gage pin (140) is a 0.165 in gage pin.

8. A dovetail (52) for a blade assembly (50) for a turbine engine (10) generating hot combustion gases at a redline exhaust gas temperature (*EGT*) between 920 °C and 980 °C, wherein the turbine engine (10) includes a disk (32) provided within an engine core (11) rotatable about an engine centerline (20), and the disk (32) rotatable at a redline rotational speed (*N2*) for the turbine engine between 233.0 Hz and 267.0 Hz, the dovetail (52) comprising:

   an aft face (66);
   an inlet passage (82) extending through the dovetail (52) and defining a passage axis (86), wherein the inlet passage (82) is positioned such that the passage axis (86) is spaced from the aft face (66) by a spacing distance (76) of 0.275 in;
   a first portion (100) including a first upper lobe (110), a first lower lobe (112), and a first intervening recess (114) between the first upper lobe (110) and the first lower lobe (112);
   a first curved surface (156) partially defining the first lower lobe (112) and the first intervening recess (114);
   a second curved surface (154) partially defining the first upper lobe (110) and the first intervening recess (114);
   wherein a spaced plane (Y2-Y2) is defined parallel to the aft face (66) and parallel to and intersecting the passage axis (86);
   wherein an offset plane (F-F) is defined offset from the spaced plane (Y2-Y2) by 10-degrees rotated about the passage axis (86);
   wherein a first radius length (*L*) is defined as a radius of curvature of the first curved surface (156) measured along the offset plane (F-F), wherein the first radius length (L) is between 0.001016 m and 0.001981 m; and
   wherein a second radius length (*U*) is defined as a radius of curvature of the second curved surface (154) measured along the offset plane (F-F), wherein the second radius length (*U*) is between 0.000508 m and 0.001778 m;
   wherein the redline exhaust gas temperature (*EGT*), the redline rotational speed (*N2*), the first radius length (*L*), and the second radius length (*U*), define a first value (*EQ1*) by the following expression:

$$EQ1 = \left( \left( \frac{L}{0.0015\,m} \right)^4 * \left( \frac{1}{e^{\left(\frac{U}{1\,m}\right)}} \right) \right)^2 * \left( \frac{\left(\frac{N2}{250\,Hz}\right)^{\frac{1}{2}}}{\left(\frac{EGT}{950\,°C}\right)^{\frac{1}{2}}} \right);$$

   and
   wherein the first value (*EQ1*) is between 0.0420 and 9.6918.

9. The dovetail (52) of claim 8, wherein the first intervening recess (114) is sized to receive a gage pin (140), and wherein the gage pin (140) is a 0.165 in gage pin.

**FIG. 1**

EP 4 726 173 A1

**FIG. 2**

**FIG. 3**

FIG. 4

# FIG. 5

FIG. 6

Europäisches
Patentamt
European
Patent Office
Office européen
des brevets

# EUROPEAN SEARCH REPORT

**Application Number**

EP 25 20 8007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 532 235 A (GEN ELECTRIC) 23 August 2024 (2024-08-23) * the whole document * | 1-9 | INV. F01D5/14 F01D5/30 F01D5/18 |
| X | Easa: "TYPE-CERTIFICATE DATA SHEET No. E.003 for CFM56-5B and CFM56-5C series engines", , 9 January 2023 (2023-01-09), pages 1-18, XP093374881, Retrieved from the Internet: URL:https://www.easa.europa.eu/en/document-library/type-certificates/engine-cs-e/easae003-cfm-international-sa-cfm56-5band5c-series#group-easa-downloads [retrieved on 2026-03-09] * pages 1,3,14 - page 15 * | 1-9 | |
| X | EP 2 900 924 B1 (UNITED TECHNOLOGIES CORP [US]) 15 May 2019 (2019-05-15) * paragraphs [0041] - [0053]; figures 1-5 * | 1-9 | |
| X | CN 100 359 134 C (GEN ELECTRIC [US]) 2 January 2008 (2008-01-02) * the whole document * | 1-9 | TECHNICAL FIELDS SEARCHED (IPC) F01D |
| A | US 10 895 160 B1 (SINCLAIR GLENN B [US]) 19 January 2021 (2021-01-19) * the whole document * | 1-9 | |

The present search report has been drawn up for all claims

| Place of search | Date of completion of the search | Examiner |
|---|---|---|
| Munich | 10 March 2026 | Chatziapostolou, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 8007

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2026

| Patent document cited in search report | | Publication date | Patent family member(s) | | Publication date |
|---|---|---|---|---|---|
| CN 118532235 | A | 23-08-2024 | CN | 118532235 A | 23-08-2024 |
| | | | US | 2024280028 A1 | 22-08-2024 |
| EP 2900924 | B1 | 15-05-2019 | EP | 2900924 A2 | 05-08-2015 |
| | | | US | 2014083114 A1 | 27-03-2014 |
| | | | WO | 2014099082 A2 | 26-06-2014 |
| CN 100359134 | C | 02-01-2008 | CN | 1456791 A | 19-11-2003 |
| | | | DE | 60318147 T2 | 04-12-2008 |
| | | | EP | 1361340 A2 | 12-11-2003 |
| | | | JP | 4179921 B2 | 12-11-2008 |
| | | | JP | 2004003471 A | 08-01-2004 |
| | | | US | 2003206803 A1 | 06-11-2003 |
| US 10895160 | B1 | 19-01-2021 | NONE | | |

EPO FORM P0459

For more details about this annex : see Official Journal of the European Patent Office, No. 12/82

**REFERENCES CITED IN THE DESCRIPTION**

**Patent documents cited in the description**

- US 63706231